# EUROPEAN PATENT SPECIFICATION

(11) **EP 2 969 469 B1**
(45) Date of publication and mention of the grant of the patent: **10.05.2017**
(21) Application number: 13713745.1
(22) Date of filing: 15.03.2013
(51) Int. Cl.: B29C 49/04, A01K 75/04, B29C 43/18, B63B 22/22, B29C 49/02, B29L 31/00, B29K 23/00, B29C 49/00

(54) **A BUOYANCY FLOAT MANUFACTURING PROCESS**
AUFTRIEBSKÖRPERHERSTELLUNGSVERFAHREN
PROCÉDÉ DE FABRICATION D'UN FLOTTEUR DE FLOTTAISON

(43) Date of publication of application: 20.01.2016
(73) Proprietor: Milligan, William Alec, Regaskin, County Cavan (IE)
(72) Inventor: GEOGHEGAN, Patrick Gerard, Ballyconnell County Cavan (IE)
(74) Representative: Schütte, Gearoid
(86) International application number: PCT/EP2013/000802
(87) International publication number: WO 2014/139544

(56) References cited:
- EP-B1- 1 106 499
- FR-A- 1 441 819
- GB-A- 997 859

## Description

### Technical Field

The present invention relates to an extrusion blow moulding process for manufacturing a buoyancy float of the type comprising an inflatable, elongate, hollow body of a thermoplastics material, carrying at each end a support connector, each support connector carrying at least a pair of spaced-apart anchorages.

### Background of the Invention

Such a buoyancy float is described and claimed in European patent specification number EP1 106 499 B1 in the name of Preton Limited one of the inventors of which, namely Alec Milligan, is the present applicant. The total disclosure of this patent specification is deemed to be included in this specification by way of direct reference.

As detailed in this specification fishing nets are often suspended across wide expanses of water by buoyancy floats until such time as it is desired to harvest a catch. Additionally they are being used increasingly in other marine operations, such as, for example, fish farming, particularly in the farming of bivalves, where the bivalves are suspended from ropes which in turn are supported by buoyancy floats in the water. Such floats support one or more commonly two spaced apart rows of float ropes. In use the buoyancy floats are subject to repetitive strain and considerable loadings during handling. The problem of attaching/ detaching such buoyancy floats from the float ropes has been addressed in a co-pending UK patent application 130 1198 filed on January 23, 2013 by the present applicant, as yet unpublished.

Another of the problems with such constructions of buoyancy floats is firstly the difficulty in fitting a valve to the buoyancy float during manufacture and then secondly, during use, replacing defective valves. This problem has been addressed in EP 106 499 B1

One of the major problems that arises with these buoyancy floats is that since each of the float ropes is connected to the spaced-apart anchorages on its respective support connector the support connectors and specifically the spaced-apart anchorages are subject to considerable mechanical strain and stress during use. It is not uncommon for one of the spaced-apart anchorages to be broken or cracked and since they are generally hollow this leads to water ingress and to effectively destroying the whole float and requiring its replacement, as it would be practically impossible to repair on-site. The present invention is directed towards overcoming this problem such that when an anchorage is fractured or broken that its effect is not catastrophic on the float. It will be appreciated that in many instances the fracturing of an anchorage, if it did not allow for the ingress of water, is not that important. While such a mishap may cause a certain amount of problems with the float, the float can probably continue to operate very effectively with three anchorages and may not even require any repair in situ. Further, any repair effected in situ is of a mechanical nature rather than a major moulding/plastics material repair operation.

An additional problem in relation to buoyancy floats generally is the need to ensure that as the buoyancy floats sink under the water on increased load being experienced that the buoyancy float does not collapse irrevocably but that when raised again to the top of the water resumes its proper shape. This can be a major problem in the sense that when the buoyancy floats are first placed in the water it is inadvisable to have them riding too high in the water. Accordingly, they will all naturally sink somewhat during use such as for example when growing bivalves. This requires considerable care and attention in the blow moulding process and also in providing the correct thermoplastics material.

The present invention is directed towards providing an improved construction of buoyancy float together with an improved moulding process for manufacturing such a buoyancy float which will overcome the problems detailed above. The invention is particularly directed to providing a buoyancy float which when a support connector used for carrying an anchorage for connection to a float rope fractures the whole buoyancy float is not rendered inoperative but can continue to operate if not at maximum effectiveness at an acceptable level of efficiency. Additionally, the support connector should be relatively easily repaired without the need for elaborate and expensive equipment.

### Summary of the Invention

According to the invention there is provided an extrusion blow moulding process for manufacturing a buoyancy float of the type comprising an inflatable, elongate, hollow body of a thermoplastics material, carrying at each end a support connector, each support connector carrying at least a pair of spaced-apart anchorages characterised in that:
a parison is formed having a pair of spaced apart thickened end portions joined by a connecting thinner neck portion, the amount of plastics material forming each end portion being greater than that required to fill all that portion of a mould used to form each support connector whereby on introduction of the parison into the mould, closing the mould compresses each thickened end portion and the plastics material is effectively compression moulded into that portion of the mould used to form each support connector.

This ensures that the spaced apart anchorages are effectively solid such that on being cracked or indeed severed as long as the elongate hollow body portion is not cracked water cannot enter the buoyancy float and thus render the buoyancy float inoperative. Using this method of using a parison is essentially counter-intuitive as the basic idea of using a parison is to have it hollow and expand it out onto the walls of the mould. To actually consider using a compression moulding technique in combination with a blow moulding technique is not what most people skilled in this industry would consider doing.

In one method of the extrusion blow moulding process for manufacturing the buoyancy float the plastics material comprises a main batch and a masterbatch forming of the order of 1% to 3% by weight of the main batch and in which said main batch has a melt flow index (MFI) of between 1.6 and 2.6. The melt flow index is crucial to the ability of the moulding of the solid anchorages. The low melt flow index imparts a high viscosity to the parison thereby ensuring the molten parison fills that cavity in the mould for forming the support connectors instead of being squeezed out into a flash relief area.

Ideally the MFI of the main batch is substantially 2.0.

Generally, the masterbatch forms 1.8% to 2.2% percent by weight of the main batch and more often forms substantially 2% by weight of the main batch.

In one method of the extrusion blow moulding process the masterbatch includes a colour pigment and/or a UV absorber. This prevents major degradation of the thermoplastics material which is in many methods of carrying out the invention a polyethylene of high molecular weight.

In one preferred method of carrying out the invention the main batch comprises virgin plastics material mixed with regrind plastics material of between 10% to 20% by weight of the main batch. This regrind material is more often of the order of 13% to 17% by weight of the main batch. It is preferably of the order of 15% by weight of the main batch. The re-grind component is in most instances essential to alter the bulk density of the main batch so as to optimise dosing characteristics in the extruder feed operation forming the parison. This also alters the die swell characteristics of the extruded parison to facilitate compression forming of the anchorage is in the mould.

The regrind material is usually chosen to be first or second-generation regrind material as material of higher generations tends to be problematic in quality.

A particularly suitable thermoplastics material is polyethylene of high molecular weight.

In another extrusion blow moulding process for manufacturing a buoyancy float in accordance with the invention a threaded through bore is formed at one end support connector by the steps of:
forming a through bore in the plastics material while still warm and malleable; and
forming a screw thread in the through bore by inserting a closure having a closure body into the through bore again while the thermoplastics material is warm and malleable, the closure body having a screw thread formed thereon to form the corresponding screw thread in the through bore.

### Brief Description of the Drawings

The invention will be more clearly understood by the following description of some embodiments thereof and their method of manufacture, given by way of example only, with reference to the accompanying drawings, in which:
Figure 1 is a front view of the buoyancy float according to the present invention,
Figure 2 is a plan view of the buoyancy float,
Figure 3 is a perspective view of a typical use of such a buoyancy float carrying two float ropes, and
Figure 4 is a typical cross-sectional view through a parison used in the process according to the invention.

### Description of the Preferred Embodiments

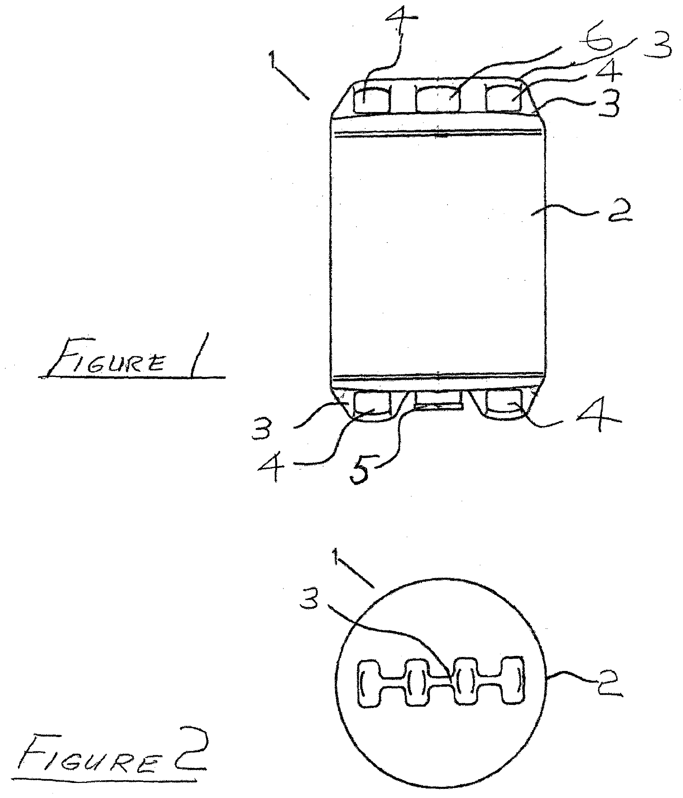

Referring to the drawings and initially to Figures 1 and 2 thereof, there is provided a buoyancy float, indicated generally by the reference numeral 1, comprising an inflatable, elongate, hollow body 2 of thermoplastics material carrying at each end a support connector 3. Each support connector 3 carries at least a pair of spaced-apart anchorages 4. One support connector 3 carries a valve 5 and the other a handle 6.

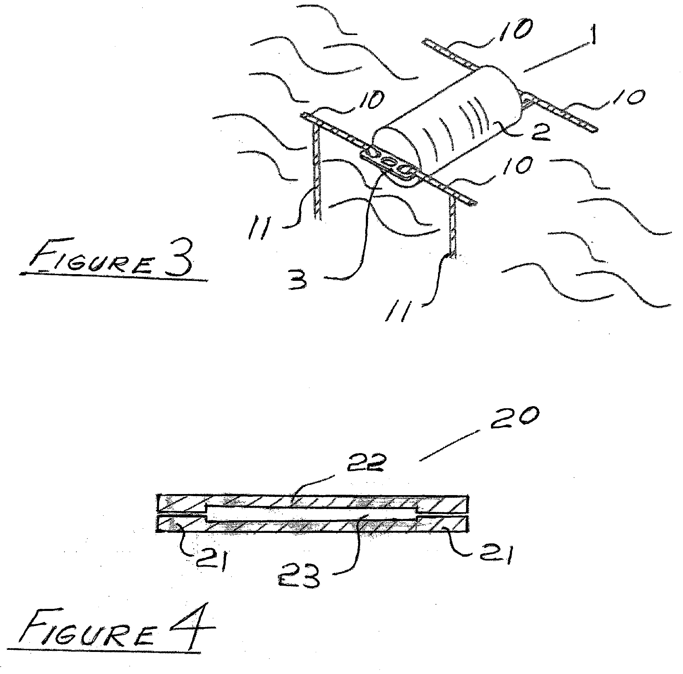

Referring now to Figure 3 there is illustrated the buoyancy float 1 mounted between two float ropes 10, in turn carrying depending ropes 11 for the growing of mussels. This is a typical arrangement of a buoyancy float. The connection of the float ropes 10 to the buoyancy float 1 is shown as merely a float rope 10 leading through the spaced apart anchorages 4. Normally the float ropes 10 would not be directly connected to the buoyancy float 1 but would be connected by suitable connectors such as described in the co-pending UK patent application referenced above or by means of separate lighter gauge ropes spliced to the float ropes.

In the blow moulding process for manufacturing the buoyancy float 1, the moulding process is substantially conventional. However, referring to Figure 4 there is illustrated a parison, indicated generally by the reference numeral 20, having a pair of spaced apart thickened end portions 21 connected by a thin neck portion 22 and including a bore 23. The bore 23 is greatly reduced in diameter to achieve this thickening adjacent each end. The dimensions of the two thickened end portions 21 are so chosen that the amount of plastics material forming each end portion 21 is greater than that required to fill all of that portion of the mould used to form each end support connector 3. Accordingly, on introduction in the normal fashion of the parison 20 into the mould and then closing the mould, the mould compresses each thickened end portion and the thermoplastics material is effectively compression moulded into that portion of the mould used to form each support connector 3.

The valve 5 is manufactured by forming a through bore in one end support connector 3. Then a closure having a closure body with a screw thread formed thereon is inserted into the through bore while the plastics material is warm so as to form a corresponding thread in the through bore. The closure may then have a suitable construction to carry a valve as required or simply a blanking closure.

The plastics material used to form the buoyancy float is ideally of polyethylene of a high molecular weight or any other suitable thermoplastics material can be used.

One commercially available thermoplastics material is manufactured and sold by Total Petrochemicals under the designation Polyethylene HDPE 56020 S. This is described as a very high molecular weight high-density polyethylene with high resistance to impact, good chemical resistance and optimised balance between Environmental Stress Cracking Resistance (ESCR) and rigidity. This has been specifically designed for the manufacture of blow moulded UN-marked articles dedicated for the transportation of dangerous goods. HDPE 56020 S is a powder grade and contains antioxidants. Its typical melt flow index or Melt Flow Rate (MFR) (190°C/21.6kg) is 2.1 g/10 min.

The plastics material comprises the main batch and a master batch forming of the order of 1% to 3% of the main batch by weight. Ideally the master batch forms of the order of 1.8% to 2.2% by weight of the main batch and is ideally relatively close to 2% by weight of the main batch.

The melt flow index (MFI) of the main batch is substantially 2.0. It generally comprises virgin plastics material mixed with regrind plastics material of between 10% and 20% by weight of the main batch. The MFI may be varied between 1.6 and 2.6. Generally, the regrind plastics material is more usually of the order of 13% to 17% of the main batch and is often of the order of 15%. The regrind material is generally not more than first or second generation regrind material. With further generation regrind material the quality tends to be reduced.

The master batch ideally includes a colour pigment and/or UV absorbers. The UV absorbers are for both plastics material degradation and discolouration.

The terms "include" and "comprise" and any necessary grammatical variations thereof are used interchangeably in this specification and should be accorded the widest possible interpretation.

The invention is not limited to the embodiments or to any of the methods described herein which may be varied in both construction and detail within the scope of the claims.

## Claims

1. An extrusion blow moulding process for manufacturing a buoyancy float (1) of the type comprising an inflatable, elongate, hollow body (2) of a thermoplastics material, carrying at each end a support connector(3), each support connector (3) carrying at least a pair of spaced-apart anchorages (4) **characterised in that**:
a parison (20) is formed having a pair of spaced apart thickened end portions (21) joined by a connecting thinner neck portion (22), the amount of plastics material forming each end portion (21) being greater than that required to fill all that portion of a mould used to form each support connector (3) whereby on introduction of the parison (20) into the mould, closing the mould compresses each thickened end portion (21) and the plastics material is effectively compression moulded into that portion of the mould used to form each support connector (3).

2. An extrusion blow moulding process for manufacturing a buoyancy float (1) as claimed in claim 1 in which the plastics material comprises a main batch and a masterbatch forming of the order of 1% to 3% by weight of the main batch and in which said main batch has a melt flow index (MFI) of between 1.6 and 2.6.

3. An extrusion blow moulding process for manufacturing a buoyancy float (1) as claimed in claim 2 in which the MFI of the main batch is substantially 2.0.

4. An extrusion blow moulding process for manufacturing a buoyancy float (1) as claimed in claim 2 or claim 3 in which the masterbatch forms 1.8% to 2.2% percent by weight of the main batch.

5. An extrusion blow moulding process for manufacturing a buoyancy float (1) as claimed in claim 2 or claim 3 in which the masterbatch forms a substantially 2% by weight of the main batch.

6. An extrusion blow moulding process for manufacturing a buoyancy float (1) as claimed in any one of claims 2 to 5, in which the masterbatch includes a colour pigment.

7. An extrusion blow moulding process for manufacturing a buoyancy float (1) as claimed in any one of claims 2 to 6, in which the masterbatch includes UV absorbers.

8. An extrusion blow moulding process for manufacturing a buoyancy float (1) as claimed in claim 7 in which the UV absorbers are for both plastics material degradation and for discolouration.

9. An extrusion blow moulding process for manufacturing a buoyancy float (1) as claimed in as claimed in any one of claims 2 to 8 wherein the main batch comprises virgin plastics material mixed with regrind plastics material of between 10% to 20% by weight of the main batch.

10. An extrusion blow moulding process for manufacturing a buoyancy float (1) as claimed in claim 9 in which the regrind material is of the order of 13% to 17% by weight of the main batch.

11. An extrusion blow moulding process for manufacturing a buoyancy float (1) as claimed in claim 9 in which the regrind material is substantially of the order of 15% by weight of the main batch.

12. An extrusion blow moulding process for manufacturing a buoyancy float (1) as claimed in any one of claims 9 to 11 in which the regrind material is first or second-generation regrind material.

13. An extrusion blow moulding process for manufacturing a buoyancy float (1) as claimed in any one of the preceding claims in which the plastics material is a polyethylene of high molecular weight material.

14. An extrusion blow moulding process for manufacturing a buoyancy float (1) as claimed in any one of the preceding claims in which a threaded through bore is formed at one end support connector( 3 ) by the steps of:
forming a through bore in the plastics material while still warm and malleable; and
forming a screw thread in the through bore by inserting a closure having a closure body into the through bore while the thermoplastics material is warm and malleable, the closure body having a screw thread formed thereon to form the corresponding screw thread in the through bore.

## Patentansprüche

1. Extrusionsblasformverfahren zum Herstellen eines Auftriebskörpers (1) der einen aufblasbaren langgestreckten Hohlkörper (2) aus einem thermoplastischen Material umfassenden Art, der an jedem Ende einen Halteverbinder (3) trägt, wobei jeder Halteverbinder (3) mindestens ein Paar voneinander beabstandete Verankerungen (4) trägt, **dadurch gekennzeichnet, dass**:
ein Blasrohling (20) gebildet wird, der ein Paar voneinander beabstandete verdickte Endabschnitte (21) aufweist, die durch einen verbindenden dünneren Halsabschnitt (22) verbunden sind, wobei die jeden Endabschnitt (21) bildende Menge an Kunststoff größer ist, als die zum Füllen des gesamten Abschnitts eines zum Bilden jedes Halteverbinders (3) verwendeten Formwerkzeugs benötigte, wodurch beim Einbringen des Blasrohlings (20) in das Formwerkzeug das Schließen des Formwerkzeugs jeden verdickten Endabschnitt (21) zusammendrückt und der Kunststoff effektiv in den zum Bilden jedes Halteverbinders (3) verwendeten Abschnitt des Formwerkzeugs gepresst wird.

2. Extrusionsblasformverfahren zum Herstellen eines Auftriebskörpers (1) nach Anspruch 1, wobei der Kunststoff eine Hauptcharge und eine Mastercharge, die in der Größenordnung von 1 Gewichts-% bis 3 Gewichts-% der Hauptcharge bildet, umfasst und wobei die Hauptcharge einen Schmelzindex (MFI) von zwischen 1,6 und 2,6 aufweist.

3. Extrusionsblasformverfahren zum Herstellen eines Auftriebskörpers (1) nach Anspruch 2, wobei der MFI der Hauptcharge im Wesentlichen 2,0 beträgt.

4. Extrusionsblasformverfahren zum Herstellen eines Auftriebskörpers (1) nach Anspruch 2 oder Anspruch 3, wobei die Mastercharge 1,8 Gewichts-% bis 2,2 Gewichts-% der Hauptcharge bildet.

5. Extrusionsblasformverfahren zum Herstellen eines Auftriebskörpers (1) nach Anspruch 2 oder Anspruch 3, wobei die Mastercharge im Wesentlichen 2 Gewichts-% der Hauptcharge bildet.

6. Extrusionsblasformverfahren zum Herstellen eines Auftriebskörpers (1) nach einem der Ansprüche 2 bis 5, wobei die Mastercharge ein Farbpigment umfasst.

7. Extrusionsblasformverfahren zum Herstellen eines Auftriebskörpers (1) nach einem der Ansprüche 2 bis 6, wobei die Mastercharge UV-Absorber umfasst.

8. Extrusionsblasformverfahren zum Herstellen eines Auftriebskörpers (1) nach Anspruch 7, wobei die UV-Absorber sowohl für Zersetzung als auch Verfärbung des Kunststoffs sind.

9. Extrusionsblasformverfahren zum Herstellen eines Auftriebskörpers (1) nach einem der Ansprüche 2 bis 8, wobei die Hauptcharge Neukunststoff umfasst, der mit Kunststoffregranulat von zwischen 10 Gewichts-% bis 20 Gewichts-% der Hauptcharge gemischt ist.

10. Extrusionsblasformverfahren zum Herstellen eines Auftriebskörpers (1) nach Anspruch 9, wobei das Regranulat in der Größenordnung von 13 Gewichts-% bis 17 Gewichts-% der Hauptcharge beträgt.

11. Extrusionsblasformverfahren zum Herstellen eines Auftriebskörpers (1) nach Anspruch 9, wobei das Regranulat im Wesentlichen in der Größenordnung von 15 Gewichts-% der Hauptcharge beträgt.

12. Extrusionsblasformverfahren zum Herstellen eines Auftriebskörpers (1) nach einem der Ansprühe 9 bis 11, wobei es sich bei dem Regranulat um Regranulat der ersten oder zweiten Generation handelt.

13. Extrusionsblasformverfahren zum Herstellen eines Auftriebskörpers (1) nach einem der vorangehenden Ansprüche, wobei es sich bei dem Kunststoff um ein Polyethylenmaterial mit hohem Molekulargewicht handelt.

14. Extrusionsblasformverfahren zum Herstellen eines Auftriebskörpers (1) nach einem der vorangehenden Ansprüche, wobei eine Gewinde-Durchgangsbohrung an einem Endhalteverbinder (3) durch folgende Schritte gebildet wird:
Bilden einer Durchgangsbohrung in dem Kunststoff, während er noch warm und plastisch ist; und
Bilden eines Schraubengewindes in der Durchgangsbohrung durch Einführen eines Verschlusses mit einem Verschlusskörper in die Durchgangsbohrung, während das thermoplastische Material warm und plastisch ist, wobei der Verschlusskörper ein darauf gebildetes Schraubengewinde aufweist, um das entsprechende Schraubengewinde in der Durchgangsbohrung zu bilden.

## Revendications

1. Procédé de moulage par extrusion et soufflage à des fins de fabrication d'un flotteur de flottaison (1) du type comportant un corps creux allongé et gonflable (2) en un matériau thermoplastique, portant à chaque extrémité un connecteur de support (3), chaque connecteur de support (3) portant au moins une paire de dispositifs d'ancrage (4) espacés l'un par rapport à l'autre, **caractérisé en ce que** :
une paraison (20) est formée ayant une paire de parties d'extrémité épaissies espacées l'une par rapport à l'autre (21) reliées par une partie formant col de connexion plus mince (22), la quantité de matériau plastique formant chaque partie d'extrémité (21) étant supérieure par rapport à celle requise pour remplir l'intégralité de cette partie d'un moule servant à former chaque connecteur de support (3) ce par quoi, lors de l'introduction de la paraison (20) dans le moule, la fermeture du moule comprime chaque partie d'extrémité épaissie (21) et le matériau plastique est moulé par compression de manière efficace dans cette partie du moule servant à former chaque connecteur de support (3).

2. Procédé de moulage par extrusion et soufflage à des fins de fabrication d'un flotteur de flottaison (1) selon la revendication 1, dans lequel le matériau plastique comporte un mélange principal et un mélange-maître constituant de l'ordre de 1 % à 3 % en poids du mélange principal et dans lequel ledit mélange principal a un indice de fluidité (MFI) compris entre 1,6 et 2,6.

3. Procédé de moulage par extrusion et soufflage à des fins de fabrication d'un flotteur de flottaison (1) selon la revendication 2, dans lequel le MFI du mélange principal est sensiblement de 2,0.

4. Procédé de moulage par extrusion et soufflage à des fins de fabrication d'un flotteur de flottaison (1) selon la revendication 2 ou la revendication 3, dans lequel le mélange-maître constitue de 1,8 % à 2,2 % en poids du mélange principal.

5. Procédé de moulage par extrusion et soufflage à des fins de fabrication d'un flotteur de flottaison (1) selon la revendication 2 ou la revendication 3, dans lequel le mélange-maître constitue sensiblement 2 % en poids du mélange principal.

6. Procédé de moulage par extrusion et soufflage à des fins de fabrication d'un flotteur de flottaison (1) selon l'une quelconque des revendications 2 à 5, dans lequel le mélange-maître comprend un pigment de couleur.

7. Procédé de moulage par extrusion et soufflage à des fins de fabrication d'un flotteur de flottaison (1) selon l'une quelconque des revendications 2 à 6, dans lequel le mélange-maître comprend des absorbeurs UV.

8. Procédé de moulage par extrusion et soufflage à des fins de fabrication d'un flotteur de flottaison (1) selon la revendication 7, dans lequel les absorbeurs UV sont à la fois pour la dégradation et la décoloration du matériau plastique.

9. Procédé de moulage par extrusion et soufflage à des fins de fabrication d'un flotteur de flottaison (1) selon l'une quelconque des revendications 2 à 8, dans lequel le mélange principal comporte un matériau plastique vierge mélangé avec un matériau plastique rebroyé représentant entre 10 % à 20 % en poids du mélange principal.

10. Procédé de moulage par extrusion et soufflage à des fins de fabrication d'un flotteur de flottaison (1) selon la revendication 9, dans lequel le matériau rebroyé est de l'ordre de 13 % à 17 % en poids du mélange principal.

11. Procédé de moulage par extrusion et soufflage à des fins de fabrication d'un flotteur de flottaison (1) selon la revendication 9, dans lequel le matériau rebroyé est sensiblement de l'ordre de 15 % en poids du mélange principal.

12. Procédé de moulage par extrusion et soufflage à des fins de fabrication d'un flotteur de flottaison (1) selon l'une quelconque des revendications 9 à 11, dans lequel le matériau rebroyé est un matériau rebroyé de première ou de deuxième génération.

13. Procédé de moulage par extrusion et soufflage à des fins de fabrication d'un flotteur de flottaison (1) selon l'une quelconque des revendications précédentes, dans lequel le matériau plastique est un matériau de polyéthylène à haut poids moléculaire.

14. Procédé de moulage par extrusion et soufflage à des fins de fabrication d'un flotteur de flottaison (1) selon l'une quelconque des revendications précédentes, dans lequel un alésage traversant fileté est formé au niveau d'un connecteur de support d'extrémité (3) par les étapes consistant à :
former un alésage traversant dans le matériau plastique alors qu'il est encore chaud et malléable ; et
former un filetage de vis dans l'alésage traversant en insérant une fermeture ayant un corps de fermeture dans l'alésage traversant alors que le matériau thermoplastique est chaud et malléable, le corps de fermeture ayant un filetage de vis formé sur celui-ci pour former le filetage de vis correspondant dans l'alésage traversant.
